(19) Europäisches Patentamt
European Patent Office
Office européen des brevets

(11) EP 2 432 170 A1

(12) EUROPEAN PATENT APPLICATION

(43) Date of publication:
21.03.2012 Bulletin 2012/12

(51) Int Cl.:
H04L 12/56 (2006.01)        H04L 12/26 (2006.01)

(21) Application number: 10290493.5

(22) Date of filing: 16.09.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: Alcatel Lucent
75007 Paris (FR)

(72) Inventor: van Hoof, Werner
2630 Artselaar (BE)

(74) Representative: Plas, Axel Ivo Michel et al
IP HILLS NV
Hubert Frère-Orbanlaan 329
9000 Gent (BE)

(54) **A token bucket based data packet traffic shapping device**

(57)     A token bucket based data packet traffic shaping
device, comprising:
- means for receiving link layer information; and
- means for adapting the token bucket countdown pa-
rameter (P) depending on the link layer information.

Fig. 3

EP 2 432 170 A1

## Description

## Field of the Invention

The present invention generally relates to token bucket based data packet traffic shaping, i.e. a common way to control the rate of data packets that is injected in a data link. The current invention in particular relates to an improved token bucket based data packet traffic shaper that counters link layer inefficiencies.

## Background of the Invention

Token bucket based data packet traffic shapers rely on a bucket that receives tokens or credits at a constant pace, i.e. a fixed amount of tokens or credits per time unit. Per sent data packet, an amount of tokens equal or proportionate to the length of the packet is deducted from the bucket.

In case the link layer is Ethernet, an inter-packet gap of 20 bytes is introduced between successive data packets. This inter-packet gap, which comprises 8 preamble bytes, is introduced primarily for delineation purposes, i.e. it enables the receiver to recognize the start of Ethernet packets. The 8 byte preamble enables the receiver to synchronize with the transmitter clock.

The inter-packet gap obviously has an impact on the data link bandwidth that is most dramatic when short Ethernet packets are sent over this link. In case a burst of the smallest Ethernet packets is sent, i.e. packets with a length of 64 bytes, the 20 byte inter-packet gap reduces the effective bandwidth of the data link by 23 %. In case of a typical Internet packet mix, the so called IMIX that simulates real-world packet distributions, where for instance 57 % of the bandwidth is occupied by the smallest Ethernet packets of 64 bytes, 7 % of the bandwidth is occupied by packets of 570 bytes, 16 % of the bandwidth is occupied by packets of 594 bytes and 20 % of the data link bandwidth is occupied by the largest Ethernet packets of 1518 bytes, the data link still suffers from an average 16 % inefficient bandwidth usage.

In order to deal with the inefficiency due to the Ethernet inter-packet gap, traditional token bucket based data packet shapers are configured with a token fill rate that is reduced by 23% (worst case) or 18 % (average). This way, overrun of the data link capacity as a result of a burst of small Ethernet packets is avoided.

Similar transport inefficiencies exist when the link layer is ATM or Asynchronous Transfer Mode, as a result of segmentation. Since each ATM cell has a fixed length payload of 48 bytes, a data packet of 49 bytes shall occupy two ATM cells resulting in inefficient bandwidth usage.

Just like with Ethernet, a traditional token bucket based data packet traffic shaper will be preconfigured with a reduced bucket fill rate in order to compensate for the ATM transport inefficiencies and to avoid overrun resulting for instance from a burst of 49 byte long data packets.

In summary, known token bucket based data packet shapers are preconfigured to avoid bandwidth overrun as a result of link layer inefficiencies such as the Ethernet inter-packet gap and ATM segmentation. Typically, the token bucket based shapers are preconfigured with a reduced bucket fill rate that takes into account the worst case or an average scenario. In case the shaper is preconfigured taking into account the worst case scenario, the shaper shall be inefficient, leaving a substantial percentage of the data link's bandwidth unused. In case the shaper is preconfigured taking into account an average scenario, bandwidth overrun is not completely avoided and will happen for instance in case of a lengthy burst of short Ethernet packets, whilst part of the bandwidth will remain unused in other situations like for instance a burst of long Ethernet packets.

It is an objective of the present invention to disclose a token bucket based data packet traffic shaper that resolves the above mentioned shortcomings of existing token bucket based data packet shapers. In particular, the present invention aims at disclosing a token bucket based data packet traffic shaper that deals with link layer inefficiencies while optimizing the effective bandwidth usage.

## Summary of the Invention

According to the present invention, the above mentioned objectives are realized by a token bucket based data packet traffic shaping device as defined by claim 1, the shaping device comprising:

- means for receiving link layer information; and
- means for adapting a token bucket countdown parameter depending on the link layer information.

Indeed, by taking into account link layer characteristics when calculating the token bucket countdown parameter, the token or credit subtraction at packet dequeue will take into account the exact link layer inefficiency without overestimating it. This way, the risk for overrun of the data link capacity, e.g. in case of a burst of short packets, disappears without affecting the available bandwidth in case of for instance a burst of long packets.

Optionally, as defined by claim 2, the link layer information may comprise an inter-packet gap length.

In case of an Ethernet based link layer for instance, the inefficiencies are introduced by an inter-packet gap that is imposed by the standard for synchronization and delineation purposes. When the shaping device according to the present invention is informed about the inter-packet gap length, it can add this inter-packet gap length to the length of each individual packet in order to optimize the shaping.

As is further specified by claim 3, the token bucket countdown parameter may be determined by the data packet length increased statically with the inter-packet gap length.

Indeed, when the inter-packet gap is a fixed amount of bytes, e.g. 20 bytes, the data packet shaper according to the current invention could be configured to statically add 20 bytes to the length of each de-queued packet. The token bucket countdown parameter will then be reduced with the effective data packet length + 20 bytes each time a packet is de-queued by the shaper.

Alternatively, as is specified by claim 4, the token bucket countdown parameter may be determined by the data packet length increased dynamically with the inter-packet gap length.

Thus, in situations where the inter-packet gap is varying in time, the shaping device according to the present invention may be informed on the varying inter-packet gap and may dynamically add the varying inter-packet gap length to the length of each de-queued packet. The token bucket countdown parameter will then be reduced by the effective data packet length + the actual inter-packet gap applicable for the de-queued packet.

Further optionally, as defined by claim 5, the link layer information in the data packet traffic shaping device according to the current invention may comprise a fixed length segment size.

Indeed, in case of an ATM based link layer, the inefficiencies result from the ratio between the data packet size and the fixed length ATM cell size, whose payload part is named "segment size" throughout this patent application. When the shaping device according to the present invention is informed about the fixed length segment size, it can adjust the token countdown to optimize the shaping.

As is specified by claim 6, the token bucket countdown parameter may be determined by the product of the segment size and the roundup integer value of the quotient of the data packet size and the segment size.

Indeed, the segmentation inefficiencies in ATM or other fixed length data cell based link layer technologies, may be compensated for in the shaper according to the present invention by calculating the token bucket countdown parameter P as follows:

$$P = SL \times \text{roundup} (PL / SL)$$

with SL representing the length of the segments wherein the data packet has to be encapsulated, PL representing the length of the data packet that will be de-queued, and roundup representing an operator that selects for a given real value the closest, higher integer value.

Further optionally, as is indicated by claims 7 and 8, the token bucket based data packet traffic shaping device according to the current invention could be integrated in a network processor and/or a traffic manager.

In addition to a token bucket based data packet traffic shaping device as defined by claim 1, the current invention also relates to a token bucket based data packet traffic shaping method, comprising the steps of:

- making a token bucket based data packet traffic shaping device aware of link layer information; and
- adapting a token bucket countdown parameter in the data packet traffic shaping device depending on the link layer information.

**Brief Description of the Drawings**

Fig. 1 is a data packet flow diagram illustrating data packet transport inefficiencies in case of an Ethernet based link layer;

Fig. 2 is a graph illustrating data packet transport inefficiencies in case of an Ethernet based link layer as a function of the data packet length; and

Fig. 3 illustrates an embodiment of the data packet traffic shaping device according to the present invention.

**Detailed Description of Embodiment(s)**

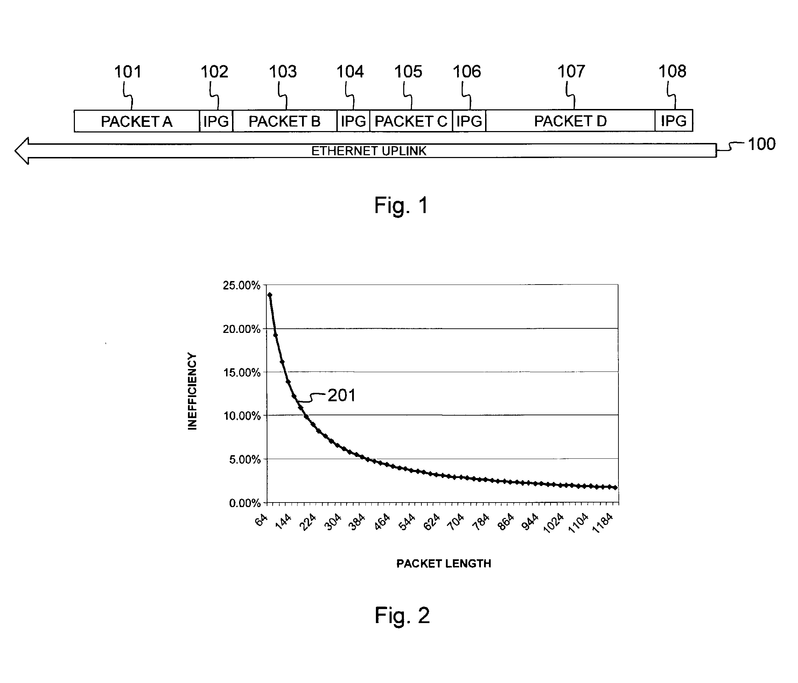

Fig. 1 illustrates the packet-size transport inefficiencies of an Ethernet data link 100. The figure shows four successive packets, PACKET A or 101, PACKET B or 103, PACKET C or 105 and PACKET D or 107. After each Ethernet packet, a minimum inter-packet gap IPG of 20 bytes, including 8 preamble bytes, is introduced. The inter-packet gap IPG introduced after the packets 101, 103, 105 and 107 is respectively denoted by 102, 104, 106 and 108 in Fig. 1. As a result of the inter-packet gap IPG, each Ethernet packet occupies more bandwidth on the Ethernet data link 100 than its own length. The effective Ethernet packet length corresponds to the sum of the packet length, which is variable in case of Ethernet packets, and the inter-packet gap. The latter inter-packet gap IPG consists of an 8 byte preamble and a 12 byte inter-frame gap.

The effect of the inter-packet gap on the efficiency of the Ethernet data link 100 is illustrated by Fig. 2. Since the inter-packet gap has a fixed length of 20 bytes, the relative loss of bandwidth resulting thereof will depend on the length of the Ethernet packets. For the shortest Ethernet packets, having a length of 64 bytes, the 20 bytes inter-packet gap results in a reduction of the effective bandwidth on the data link by 23 %. For the longest Ethernet packets, having a length of for instance 1600 bytes and containing e.g. video, the impact of the 20 bytes inter-packet gap on the effective bandwidth is limited and approximates 1 %. For typical Internet packet mix, the so called IMIX that is for instance made up of 57 % small size Ethernet packets of 64 bytes, 7 % medium size packets of 570 bytes, 16 % medium size packets of 594 bytes and 20 % large packets of 1518 bytes, the resulting inefficiency of Ethernet with the standard 20 bytes inter-packet gap approximates 16 %, because of the relative large number of smallest packets. The curve 201 in Fig. 2 illustrates the increasing inefficiency for Ethernet packet lengths ranging from 64 bytes to 1200 bytes. It is this transport inefficiency that is taken into account for the shaping algorithm according to the present invention.

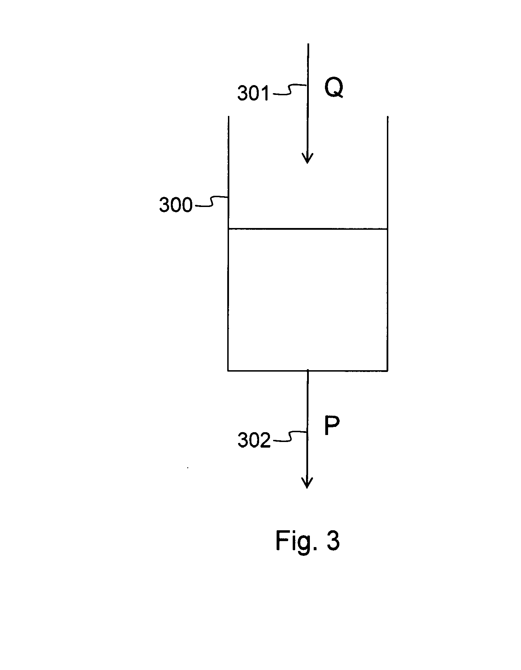

Fig. 3 shows the token bucket 300 of a token-bucket based packet shaper operating according to the present invention. The packet shaper is informed on the 20 byte inter-packet gap. The 20 byte IPG may for instance be pre-configured in the shaper, or the shaper may be informed regularly by the link layer on the inter-packet gap and eventual other link layer inefficiencies, or the shaper may gain awareness on the link layer protocol by reading a database field, e.g. on a per-packet basis. As is indicated by 301, the token bucket 300 receives Q tokens at regular time intervals, for instance every Y internal clock cycles. As is further indicated by 302, the token bucket 300 is reduced by P tokens each time a data packet is sent out or de-queued. The countdown parameter P is determined for each individual packet and according to the present invention will be calculated to represent the effective packet length: P = packet length + IPG = packet length + inter-frame gap + preamble. In the token bucket based data packet shaper illustrated by Fig. 3, a data packet is only allowed to be sent out when the token bucket level is larger than the countdown parameter P, in other words when sufficient tokens are available in the bucket 300.

Typically, shapers like the one illustrated by Fig. 3 will form part of the traffic manager, e.g. integrated in a network processor. All data packets will be stored in memory that is organized by a queue manager. The queue manager may for instance implement 32000 queues. The packet queuing may be organized per user, per line, per port, a single queue may be used to the packets of multiple users, the queue structure may be hierarchical, etc. Depending on the quality of service (QoS) requirements, a scheduler shall determine which queues are allowed to sent one or more data packets and the scheduler shall send notifications to the queue manager thereto. The token bucket based shapers of the respective queues shall then verify if the bucket of the concerned queues contains sufficient tokens, and shall adjust the fill level of the bucket when the packets are de-queued.

Queue traffic shaping provides a mechanism to control the burst volume and the steady state rate at which traffic is being sent to the data link. The queue shaping according to the present invention relies on a token bucket implementation optimizing the Ethernet data link bandwidth without the need for responsive backpressure methods.

For each shaper a configuration field is provided wherein the following information is maintained:

- the cycle count Y, i.e. the length of the time interval or the amount of internal clock cycles at which the bucket level is updated;

- the quantum Q, i.e. the amount of tokens or credits that is added to the bucket each cycle count;
- the burst threshold value, indicative for the amount of bytes that can be sent temporarily above the send level;
- the bucket assignment, i.e. the indication of the bucket that has to be updated in case multiple queues are shaped using a single shaper; and
- the IPG / segmentation parameter, i.e. the IPG length and/or the segmentation cell size.

For link layer optimized shaping, the offset parameter or bucket countdown parameter P that represents the subtracted amount of tokens at the sending of a packet, will be calculated per packet using a first order linear equation. This way, the allocation of bandwidth for the Ethernet based data link will be optimized. Practically, a fixed amount of bytes will be added to the packet length in order to determine the value of the countdown parameter P. For example, a 64 bytes packet will result in a token bucket subtraction of 84 bytes and a 1500 bytes packet will result in a token bucket subtraction of 1520 bytes.

The same principle of shaping pre-distortion can be used to adjust for transport inefficiencies due to segmentation, for example when sending traffic over an ATM data link with data packets being encapsulated in fixed size cells, the so called ATM cells. The fixed ATM cell size is 53 bytes of which only 48 bytes constitute the payload segment. Data packets that have to be transported over an ATM data link must be segmented in 48 bytes portions resulting in segmentation inefficiencies. Packaging a 96 bytes data packet results for instance in a 90 % segmentation efficiency, whereas a 97 bytes data packet results in a 61 % segmentation efficiency. In contrast to Fig. 2, the transport efficiencies curve for segmentation will have a saw tooth shape. In order to optimize bandwidth usage in case of segmentation, the token bucket countdown parameter P in a shaper according to the present invention will be calculated as follows: P = segment size x roundup (packet size / segment size).

This way, the ATM segmentation penalty is built in, such that the shaping also takes into account these traffic transport inefficiencies. This may be done by enabling the segmentation estimation feature in the shaper and providing the shaper with the segment size information.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A token bucket based data packet traffic shaping device, **CHARACTERIZED IN THAT** said shaping device comprises:

   - means for receiving link layer information; and
   - means for adapting a token bucket countdown parameter (P) depending on said link layer information.

2. A token bucket based data packet traffic shaping device according to claim 1,
   wherein said link layer information comprises an inter-packet gap (IPG) length.

3. A token bucket based data packet traffic shaping device according to claim 2,
   wherein said token bucket countdown parameter (P) is determined by the data packet length increased statically with said inter-packet gap (IPG) length.

4. A token bucket based data packet traffic shaping device according to claim 2,
   wherein said token bucket countdown parameter (P) is determined by the data packet length increased dynamically with said inter-packet gap (IPG) length.

5. A token bucket based data packet traffic shaping device according to claim 1,
   wherein said link layer information comprises a fixed length segment size.

6. A token bucket based data packet traffic shaping device according to claim 5,
   wherein said token bucket countdown parameter (P) is determined by the product of said segment size and the roundup integer value of the quotient of said data packet size and said segment size.

7. A token bucket based data packet traffic shaping device according to claim 1, said traffic shaping device being integrated in a network processor.

8. A token bucket based data packet traffic shaping device according to claim 1, said traffic shaping device being integrated in a traffic manager.

9. A token bucket based data packet traffic shaping method, **CHARACTERIZED IN THAT** said shaping method comprises:

   - making a token bucket based data packet traffic shaping device aware of link layer information; and
   - adapting a token bucket countdown parameter (P) in said data packet traffic shaping device depending on said link layer information.

EP 2 432 170 A1

| 101 | 102 | 103 | 104 | 105 | 106 | 107 | 108 |
|-----|-----|-----|-----|-----|-----|-----|-----|

| PACKET A | IPG | PACKET B | IPG | PACKET C | IPG | PACKET D | IPG |
|----------|-----|----------|-----|----------|-----|----------|-----|

ETHERNET UPLINK ⟵ 100

## Fig. 1

## Fig. 2

Fig. 3

Europäisches
Patentamt

European
Patent Office

Office européen
des brevets

# EUROPEAN SEARCH REPORT

**Application Number**

EP 10 29 0493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/232150 A1 (NISHIMURA KAZUTO [JP]) 20 October 2005 (2005-10-20) <br> * figures 1,5,10,15,16 * <br> * paragraph [0055] - paragraph [0066] * <br> * paragraph [0009] - paragraph [0012] * <br> * paragraph [0028] * <br> * paragraph [0068] * <br> ----- | 1-9 | INV. <br> H04L12/56 <br> H04L12/26 |
| X | US 7 035 220 B1 (SIMCOE ROBERT J [US]) 25 April 2006 (2006-04-25) <br> * figures 3,5 * <br> * paragraph [0041] - paragraph [0042] * <br> * paragraph [0048] - paragraph [0054] * <br> ----- | 1-9 | |
| A | EP 1 455 494 A2 (AKARA CORP [CA]) 8 September 2004 (2004-09-08) <br> * figures 2b, 3b * <br> * paragraph [0005] * <br> * paragraph [0022] * <br> ----- | 1-9 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| Munich | 9 February 2011 | Nold, Michael |

EPO FORM 1503 03.82 (P04C01)

## ANNEX TO THE EUROPEAN SEARCH REPORT
## ON EUROPEAN PATENT APPLICATION NO.

EP 10 29 0493

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2011

| Patent document cited in search report | | Publication date | Patent family member(s) | | Publication date |
|---|---|---|---|---|---|
| US 2005232150 | A1 | 20-10-2005 | WO 2004109995 A1<br>JP 4027955 B2 | | 16-12-2004<br>26-12-2007 |
| US 7035220 | B1 | 25-04-2006 | NONE | | |
| EP 1455494 | A2 | 08-09-2004 | US 2004177153 A1 | | 09-09-2004 |

EPO FORM P0459

For more details about this annex : see Official Journal of the European Patent Office, No. 12/82